# EUROPEAN PATENT APPLICATION

(11) **EP 2 773 071 A1**
(43) Date of publication of application: **03.09.2014**
(21) Application number: 14157377.4
(22) Date of filing: 28.02.2014
(51) Int. Cl.: H04L 12/58

(54) **Facilitated third-party communications**

(30) Priority: 01.03.2013 US 201361771687 P; 26.02.2014 US 201414191378
(71) Applicant: Prolifiq Software Inc., Beaverton, OR 97005 (US)
(72) Inventor: Huynh, Hemingway, Beaverton, OR 97008 (US); Huynh, Anh, Beaverton, OR 97008 (US); Farnsworth, Jeffrey Michael, Beaverton, OR 97008 (US); Wong, Isabella, Beaverton, OR 97008 (US)
(74) Representative: Moore, Barry

(57) **Abstract**

In various embodiments, systems, methods, computer-readable media, and apparatuses for facilitation of communication between recipients and third-parties. A recipient, such, for example, a physician may request and then be facilitated in engaging in communication with a selected third party, such as a medical specialist. The third party may be selected based on the physician's request or on other information gained prior to or at the time of request, such as in response to a questionnaire. A context for the communication may be maintained during the communication and stored thereafter. During subsequent communication, the stored communication may be used to restore the previous context of the previous communication. Other embodiments may be described and claimed.

## Description

### FIELD

Embodiments of the present invention relate generally to the field of electronic messaging, and in particular to provision and facilitation of communication, such as over dedicated message channels.

### Background

Existing electronic communication methods allow content generators to send their content to one or more potential recipients. Examples of such communication methods include, for example, web-based content broadcasting and blogging, API-based messaging, including microblogging services, email, and text messaging.

Unfortunately, these methods provide some disadvantages. When attempting to communicate an important message to a recipient, broadcast-style communication methods, such as web-based API-based blogs, may require action on the part of a recipient to gain the recipient's attention. Additionally, it can be difficult to tailor a message to a particular recipient, as all messages from the content provider may come through a common channel.

Other methods, such as email, or API-based microblogging services like Twitter, typically result in a content generator's messaging being aggregated with many other providers' messages. For example, if a pharmaceutical sales representative is interested in communicating with a busy physician via email, that email message will have to fight for the physician's attention along with every other email message she receives in a day. This is true no matter how much the message is personally-tailored.

Additionally, existing communication methods may not provide for interaction between recipients and other parties based on previous communications. For example, if a recipient receives content from a content generator and wishes to receive additional information, that recipient may have no easy method to be placed in contact with these other parties. Such limitations may provide missed opportunities for additional communication related to information provided to the recipient, and may stymie the ability of a content generator to effectively present his or her arguments to the recipient.

### Brief Description of the Drawings

Embodiments will be readily understood by the following detailed description in conjunction with the accompanying drawings. To facilitate this description, like reference numerals designate like structural elements. Embodiments are illustrated by way of example, and not by way of limitation, in the Figures of the accompanying drawings.
Fig. 1 illustrates a block diagram showing example usage and information flow of a computer-implemented dedicated message channel coordinator and dedicated message application, in accordance with various embodiments.
Fig. 2 illustrates an example interface generated by the dedicated message application, in accordance with various embodiments.
Fig. 3 is a flowchart illustrating an example process for setting up and communicating through a dedicated message channel between with a recipient, in accordance with various embodiments.
Fig. 4 is a flowchart illustrating an example process wherein a content generator may facilitate a communication over a dedicated message channel between a recipient and a third party, in accordance with various embodiments.
Fig. 5 is a flowchart illustrating an alternative example process wherein the dedicated message channel coordinator, or other entity, may facilitate a communication between a recipient and a third party, in accordance with various embodiments.
Fig. 6 is a flowchart illustrating an example process for setting up a system, such as the dedicated message channel coordinator, for facilitating third party communication, in accordance with various embodiments.
Fig. 7 is a flowchart illustrating an example process for identifying a third party for communication, in accordance with various embodiments.
Fig. 8 is a flowchart illustrating an example process for facilitating third party communication, in accordance with various embodiments.
Fig. 9 is a block diagram illustrating a generalized example of a suitable computing environment in which several of the described embodiments may be implemented, in accordance with various embodiments.

### DETAILED DESCRIPTION

Embodiments of the present disclosure provide systems, methods, computer-readable media, and apparatuses for providing secure, dedicated, one-to-one communication between content providers and interested participants. For example, a dedicated message channel platform may provide content generators with the ability to send recipient-specific messages to recipients, such as by using a dedicated message application installed on communication device under control of the recipient, such as a smartphone. The dedicated message channel may also be used to facilitate communication between a third party and a message recipient through a content generator facilitating the third-party communication. Further, embodiments of the present disclosure provide systems, methods, apparatus, and computer-readable media for facilitation of communication between recipients and third-parties. For example, in embodiments, according to techniques described herein, a recipient, such, for example a physician may request and then be facilitated in engaging in communication with a selected third party, such as a medical specialist. In various embodiments, the third party may be selected based on the physician's request or on other information gained prior to or at the time of request. Additionally, the third party may be selected for communication based in part on the third party's availability at the time of request. In various embodiments, a context for the communication may be maintained during the communication and stored thereafter. During subsequent communication, the stored communication may be used to restore the previous context of the previous communication. This may allow the recipient and the third party with whom the recipient (physician) has been communicating to continue communication using the previous context, improving the quality of the subsequent communication. In various embodiments, rather than selecting a single third party, a third party entity may be selected for communication with the recipient. Similarly, in various embodiments, multiple recipients may be facilitated in communicating with a single third party, either through separate channels, or through a combined channel.

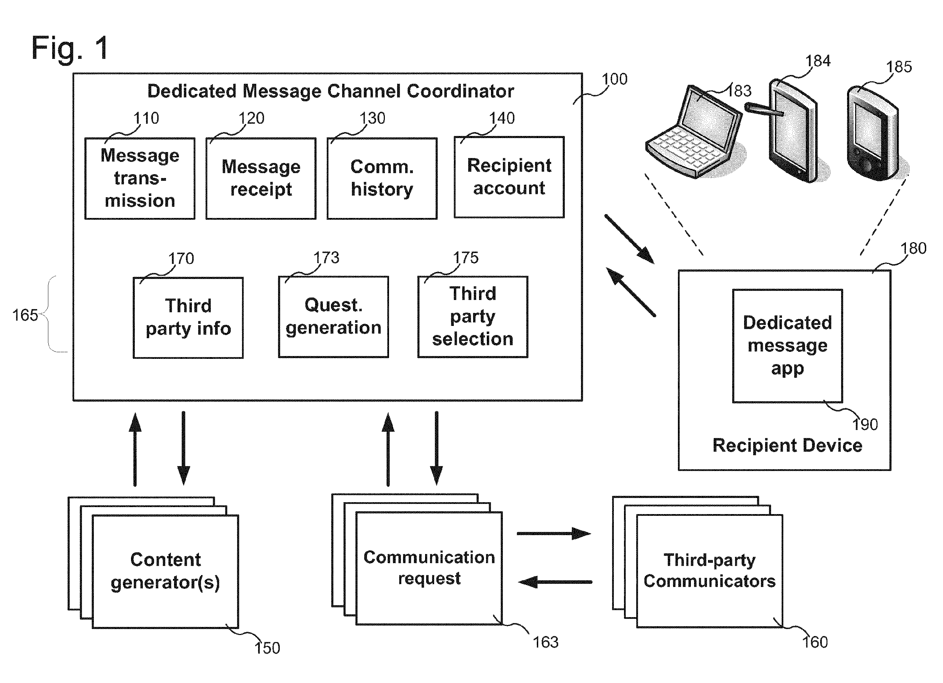

Figure 1 illustrates a dedicated message channel system in accordance with some embodiments. The dedicated message channel system may comprise a dedicated message channel coordinator 100, which works to coordinate communications between one or more content generator(s) 150 and a message recipient, such as through a recipient device 180. In various embodiments, the content generator(s) 150 may comprise individuals and/or group enterprises. In various embodiments, the recipient device 180 may comprise one of various types of electronic communications devices, such as, for example, a personal (laptop) computer 183, a tablet computer 184, and/or a smartphone 185. In various embodiments, the recipient device may be a device normally under control or accessible by the recipient, such as a device under control of a physician. In other embodiments, the recipient devices may be under control of another party, such as a sales representative, and may be provided, as needed, for the recipient to access.

In various embodiments, the dedicated message channel coordinator 100 may send and receive messages with a dedicated message application 190 executing on the recipient device. In various embodiments, the dedicated message application may be installed on the recipient device as an application and/or as a mobile app, or may take the form of a web-based application, or other centralized service. In some embodiments, where the dedicated message application takes the form of a web-based application or centralized service, the dedicated message application may be accessed by recipient devices that are not specifically configured for dedicate message techniques described herein, but may operate as terminals or web browsers. In various embodiments, the dedicated message application 190 may authenticate a recipient's identity with the dedicated message channel coordinator 100. By doing so, the dedicated message application 190 and dedicated message channel coordinator 100 may help generate an authenticated and trusted dedicated message channel through which sensitive and/or regulated messages may be transmitted. In various embodiments, the dedicated message channel may be bi-directional. As such, messages may flow not only from the content generator to the recipient, but from the recipient to the content generator as well. Using this bi-directional channel, a recipient may be facilitated in participating in an ongoing back-and-forth discourse with the content generator.

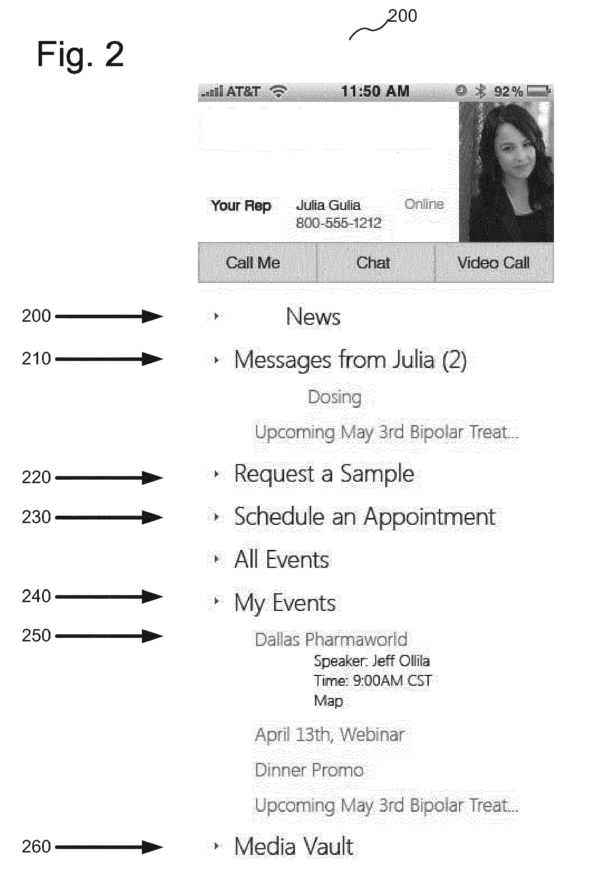

Figure 2 illustrates an example interface generated by the dedicated message application 190 for a message recipient to communicate over the dedicate message channel. In the illustrated example, the dedicated message application 190 is used for communications between a physician and a pharmaceutical sales representative. While particular elements are illustrated or discussed herein, in alternative embodiments, interfaces may comprise additional elements or may omit one or more illustrated elements. In various embodiments, all or parts of the information displayed in the interface may be selected by the content generator to provide detailed and personalized information for the message recipient.

Figure 2 illustrates a News element 200, though which the message recipient may receive news items of personal interest to himself or herself. Element 200 comprises a listing a messages from the sales representative, which may be transmitted over the secure dedicated message channel as described below. Elements 220 and 230 illustrate examples wherein the message recipient may communicate back to the sales representative over the bi-directional channel, such as to request a drug sample (220), or to schedule an appointment with the sale representative (230). At element 240, the message recipient may view various events he or she may wish to attend, such as the "Dallas Pharmaworld" event 250. Finally, element 260 illustrates a link to see additional forms of media, which may be selected, in whole or in part, by the content generator to be personalized for the message recipient.

Returning to Figure 1, in various embodiments, the dedicated message channel coordinator 100 may comprise one or more modules, such as a message transmission module 110, a message receipt module 120, a communication history module 130, a recipient account module 140, a third party info module 170, a questionnaire generation module 173, and/or a third party selection module 175. In various embodiments, the message transmission module 110 may serve to maintain connections with one or more dedicated message applications 190 on various recipient devices 180 and to send messages received from content generators (such as by the message receipt module 120) to the dedicated message applications 190. In another embodiment, the message transmission module 110 may send messages received by the message receipt module 120 to the one or more content generator(s) 150.

In various embodiments, the communication history module 130 may maintain a communication history between recipients and content generator(s) 150. In various embodiments, the communication history module 130 may provide a visual interface for viewing a communication history. In various embodiments, said viewing may be performed by a content generator 150, a recipient, and/or by an entity in control of the dedicated message channel coordinator 100. In various embodiments, the interface may be provided over a dedicated application, such as via the dedicated message application 190, or, alternatively, through a web-based interface. In various embodiments, the communication history module 130 may also maintain additional non-message information, such as event information, including events that a recipient has attended or will likely attend, or recordation of particular sensitive communications. For example, the communication history module may maintain information on communications that need to be recorded between a pharmaceutical sales representative and a physician for record keeping or future auditing. In various embodiments, the communication history module may also maintain and/or store communication history and context for communications between the recipient and third parties. For example, if a physician has previously communicated with a third party via a video conference that has been facilitated by the dedicated message channel coordinator 100, the communication history module 130 may maintain such information as, for example, a recorded history of the video conference, a history of one or more files and/or web sites that have been exchanged and/or viewed during the video conference, a history of text messages that have been seen during the video conference, etc. In various embodiments, history and/or context of communications between physicians and third parties may be maintained and/or stored by a different module and/or storage device. In various embodiments, this information may also be used for selection of third parties for subsequent communication.

In various embodiments, the recipient account module 140 may maintain account information about message recipients, such as, for example, account names, passwords, names, addresses, phone information, and/or other information which relates to particular recipients. In various embodiments, the recipient account module may provide authentication services for a content generator and/or a recipient to authenticate their identities when seeking to communicate through a dedicated message channel.

As discussed above, in various embodiments, the dedicated message channel coordinator 100 may be configured to facilitate communications between recipients and third parties. For example, if a physician is receiving information about a pharmaceutical via the dedicate message channel, the physician may wish to obtain additional information that may be best provided by a third party. This third party may, in various embodiments, be an individual such as another physician, an entity, such as a testing company or manufacturer, or a collection of individuals. In various embodiments, this facilitation of communication may include dynamic, rules-driven selection of third parties (or of individuals associated with third parties), in order to better provide opportunities for communication that best suits both the needs of the recipient, the needs of the third party, and the availability of either. It may also be recognized that, in some embodiments, multiple third parties and/or recipients may be selected and may participate in a communication simultaneously.

To facilitate this communication, the dedicated message channel coordinator 100 may be configured with one or more third party communication modules 165. These third party communication modules 165 may be configured to facilitate communication with one or more third party individuals 160. In various embodiments, the third party communication modules 165 may be configured to execute on one or more local computing devices associated with the third party individuals 160. The third party communication modules 165 may include various tools for communication, including, but not limited to, video conferencing, text messaging, text-based chat, etc. In various embodiments, third party communication modules 165 may be configured to alert one or more third parties of communication requests 163 made by or on behalf of a recipient and to provide a time for acceptance of a communication request 163.

In various embodiments, the third party information module 170 may be configured to maintain information about various third parties with which a recipient may communicate using the dedicated message channel coordinator 100. For example, in various embodiments, for medical specialists that may communicate with physician recipients, the third party information module 170 may, for example, maintain information regarding medical specialties, experience, language skills, time and/or geographic availability, name and/or other identifying information, etc. In various embodiments, this information may be used to select a third party for communication with a recipient in response to a request for such information.

In various embodiments, the questionnaire generation module 173 may be configured to generate questions to use at the time of request for third party communication by a recipient. For example, if a physician is asking to communicate with a medical specialist, the dedicated message channel coordinator 100 may be configured to provide a questionnaire to the physician to obtain better information about the physician's request. In various embodiments, the questionnaire generation module 173 may be configured to generate and provide these questions based on information maintained about third party individuals 160.

Based on the results of that questionnaire, the dedicated message channel coordinator 100 may be configured from which to select a third party for communication. This selection may be performed, in various embodiments, by the third party selection module 175. In various embodiments, the third party selection module 175 may be configured to apply one or more business rules (not pictured) to data about the third party individuals 160, the request of the recipient, and/or results of one or more questionnaires to determine one or more third parties with which to facilitate communication. From this determination communication requests 163 may be made to third parties, and out of these requests, communication may be facilitated between the third parties and the recipients.

Particular examples of facilitation of third party communication are described below. It may be noted that the examples provide above described above in Figure 2 illustrates facilitation of third party communication in the context of the dedicated message channel coordinator 100, which is configured to provide for asynchronous message delivery between content generators 150 and recipients. However, in various embodiments, communication may be facilitated between third parties and recipients without requiring it be co-embodied with other asynchronous message provisioning. In other embodiments, third party communications may be facilitated through actions of one or more intermediaries. For example, a pharmaceutical sales representative may utilize one or more embodiments to facilitate communication between a physician and a medical specialist on a device that is otherwise under control of the sales representative. This facilitation may be performed, in various embodiments, without requiring the physician to have otherwise received content from content generators. Thus, while the term "recipient' is used herein for ease of description, it may not necessarily imply that the "recipient" be required to receive content and/or messages before or after facilitation of third party communications with the recipient.

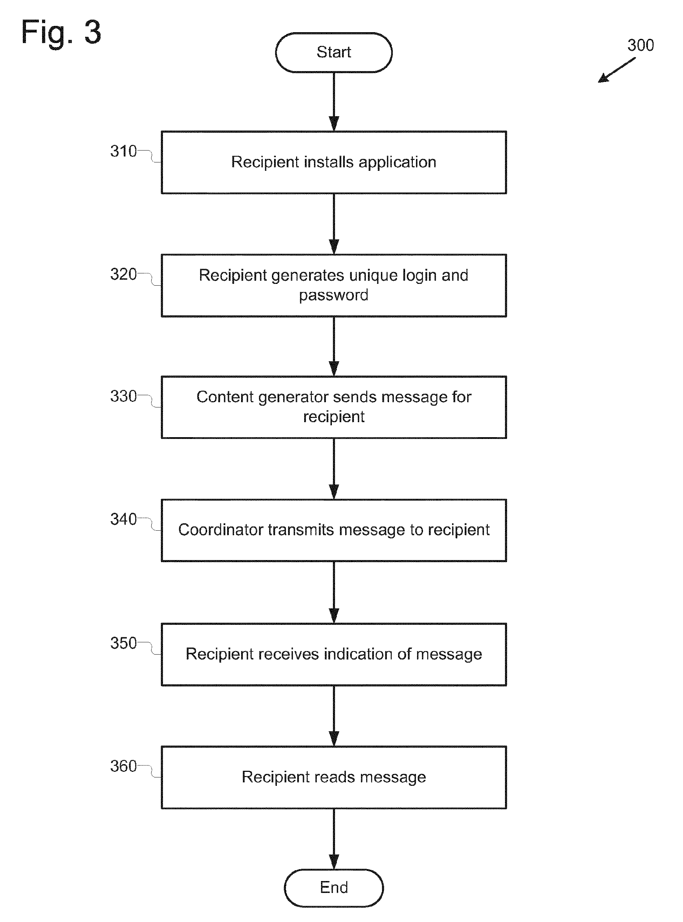

Figure 3 is a flowchart illustrating an example process for setting up and communicating through a dedicated message channel between with a recipient. The process may begin at operation 310, where a recipient may install the dedicated messaging application 190 on his or her device. At operation 320, the recipient may generate a unique login and password to identify himself or herself when using the dedicated messaging channel. In various embodiments, the recipient may generate the login and/or password using an interface of the dedicated messaging application 190, or through another interface, such as a web-based interface provided by the dedicated message channel coordinator 100.

At operation 330, the content generator may send a message for receipt by the recipient. In various embodiments, the message may be sent to the dedicated message channel coordinator 100 through various electronic messaging protocols or systems, as may be understood. As used herein messages may be any of a variety of message types including, but not limited to, a text message, a multimedia message, an electronic mail (e-mail), a file (either coupled to one of the earlier described message types or transferred independently), e.g., an extensible markup language (XML) file, a hypertext markup language (HTML), a message displayed in a mobile application, and the like. In alternative embodiments, the dedicated message channel coordinator 100 may receive the message through a dedicated messaging application programming interface (API), or may provide a graphical interface for generating the message directly at the dedicated message channel coordinator 100.

In various embodiments, the message may be generated from scratch by the content generator or may be generated from one or more pre-determined message templates. In some communication scenarios, such as when communicating about regulated medical information, messages may require review for regulatory compliance with standards before they can be sent. Thus, in some embodiments, the pre-determined message templates may have been reviewed before being made available to content generators. In other embodiments, the message, after being generated, may undergo a review process coordinated by the dedicated message channel coordinator 100 before it may be transmitted to the message recipient.

At operation 340, the dedicated message channel coordinator 100 may then transmit the message to the dedicated messaging application 190. In various embodiments, the dedicated message channel coordinator 100 may translate the message into a predefined format for interpretation by the dedicated messaging application 190. In alternative embodiments, such as when the message has been indicated as not a personalized one or as not sensitive, the dedicated message channel coordinator 100 may send the message through another protocol or system, such as via email or through another service.

At operation 350, the recipient may receive an indication that he or she has received a message. In various embodiments, the indication may be an indication directly from the dedicated messaging application 190 or may be delivered by an intermediary notification service. In various embodiments, the notification may precede the transmission of the message to the dedicated messaging application 190, such as if the dedicated messaging application 190 pulls the message from the dedicated message channel coordinator 100 after the notification is received. At operation 360, the recipient may read the transmitted message. In various embodiments, a confirmation may be received from the message recipient after reading. In some embodiments, confirmation may be simply that a message was read. In other embodiments, confirmation may indicate a type of communication that was transmitted or all or part of the substance of the communication. In some embodiments, confirmation may comprise an indication that the message recipient will take particular action, such as that the message recipient will attend an event.

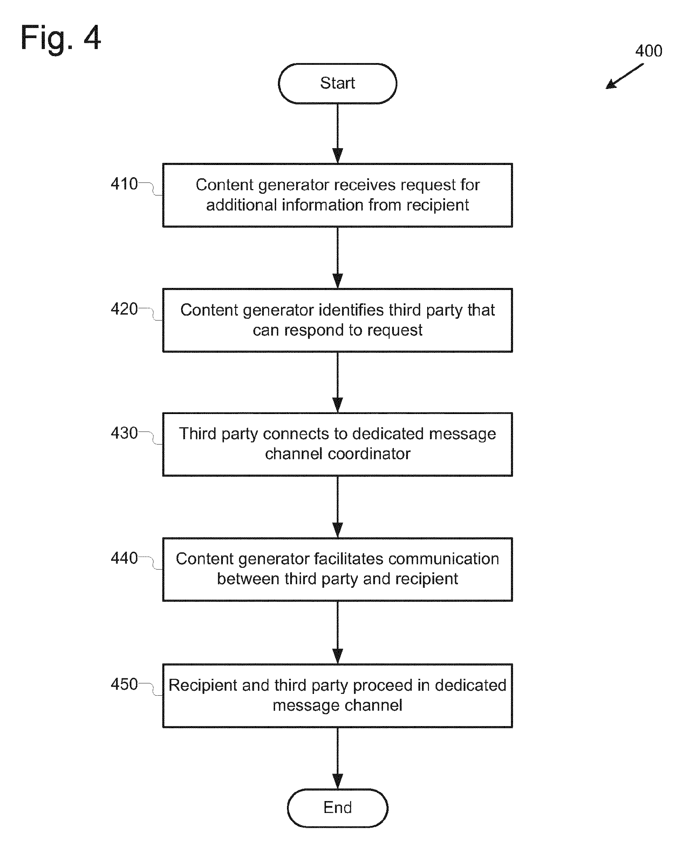

Figure 4 is a flowchart illustrating an example process wherein a content generator may facilitate a communication over a dedicated message channel between a recipient and a third party. In one embodiment, this process may be used when the content of communications between a content generator and a recipient is regulated or otherwise cannot be performed by the content generator. For example, a pharmaceutical sales representative, when discussing a drug with a physician, may be asked by the physician about a potential off-label usage. Oftentimes, the sales representative may not be allowed to partake in further communications after this inquiry, but must instead refer that physician to a medical specialist for further discussion. Using this process, the dedicate message channel may be utilized for these further communications.

The process may begin at operation 410, where the content generator receives a request for additional information from a message recipient, such as, for example, in the scenario discussed above. At operation 420, the content generator identifies a third party, such as a medical specialist, who can respond to the request for information. Next, at operation 430, the third party connects to the dedicated message channel coordinator 100 to participate in the dedicate message channel.

At operation 440, the content generator facilitates an initiation of communication between the third party and the message recipient. In various embodiments, the facilitated communication may take place over the same dedicated messaging application 190 as used during communication between the message recipient and the content generator. In some embodiments, the facilitation may comprise the content generator pre-populating a message history for the message recipient and the third party so that they have a common understanding of what they are discussing. Finally, at operation 450, the message recipient and the third party may proceed with their communication using the dedicate message channel.

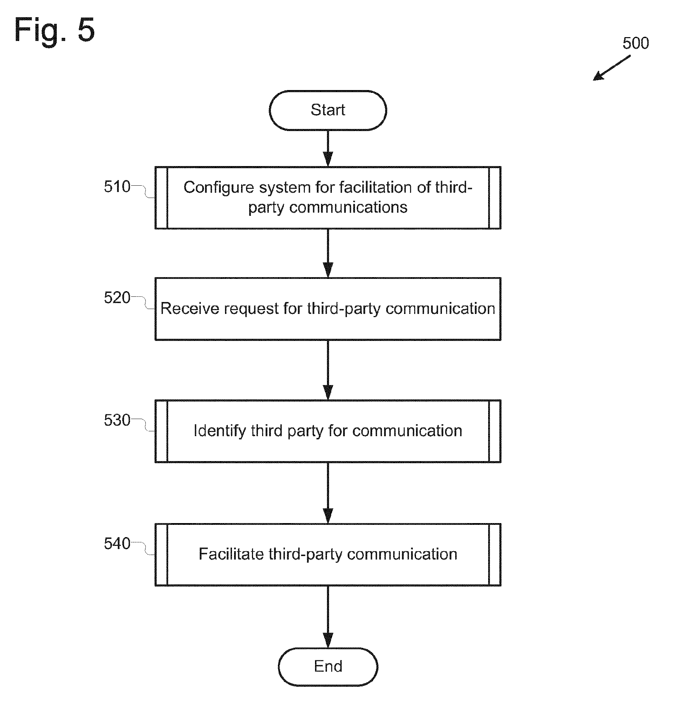

Figure 5 is a flowchart illustrating an alternative example process 500 wherein the dedicated message channel coordinator 100, or other entity, may facilitate a communication between a recipient and a third party. In one embodiment, this process may be used to facilitate communications between a recipient and a third party by an intermediary. The recipient and/or intermediary may wish to facilitate communication between the recipient and the third party such that the third party communicated with is particularly suitable for the needs of the recipient, according to in various embodiments described herein.

For example, similar to the example above, a pharmaceutical sales representative may be asked by the physician about a potential off-label usage. The sales representative may wish, or be required, to direct that physician to a medical specialist for further discussion and may wish to facilitate communication with a medical specialist who is particularly suited for the communication needs of the physician. Using this process, the dedicated message channel coordinator 100 may be utilized to identify, alert, and facilitate communications with this medical specialist.

It may be noted that, in the descriptions provided herein, multiple interactions are made between the dedicated message channel coordinator 100 and both the recipient and various third parties. In various embodiments, additional interactions may be provided to facilitate the interactions illustrated, as well as to fulfill various legal and/or professional obligations or regulations. For example, at various points, a physician recipient may be requested to read a release or other legal information before proceeding with a portion of the third-party communication processes described herein. For example, in various scenarios, the physician may be requested to provide/confirm information, conform that the physician is licensed as a health-care provider, confirm that a content generator or other party (such as a sales representative) will not be present during the third party communication, and/or provide a signature or other indication that she or he agrees with the information (or agrees to particular obligations) before continuing. In other embodiments, similar requests may be made of third parties and/or of content generators; for example a sales representative may be asked to put the recipient device in a locked mode before the third-party communication may begin. In various embodiments, the dedicated message channel coordinator 100 may be configure to provide programmatic hooks or other facilities for inserting such interactive requirements into the processes described herein. For the sake of simple explanation, however, the following procedures are described without belaboring particular examples of such requests and obligations.

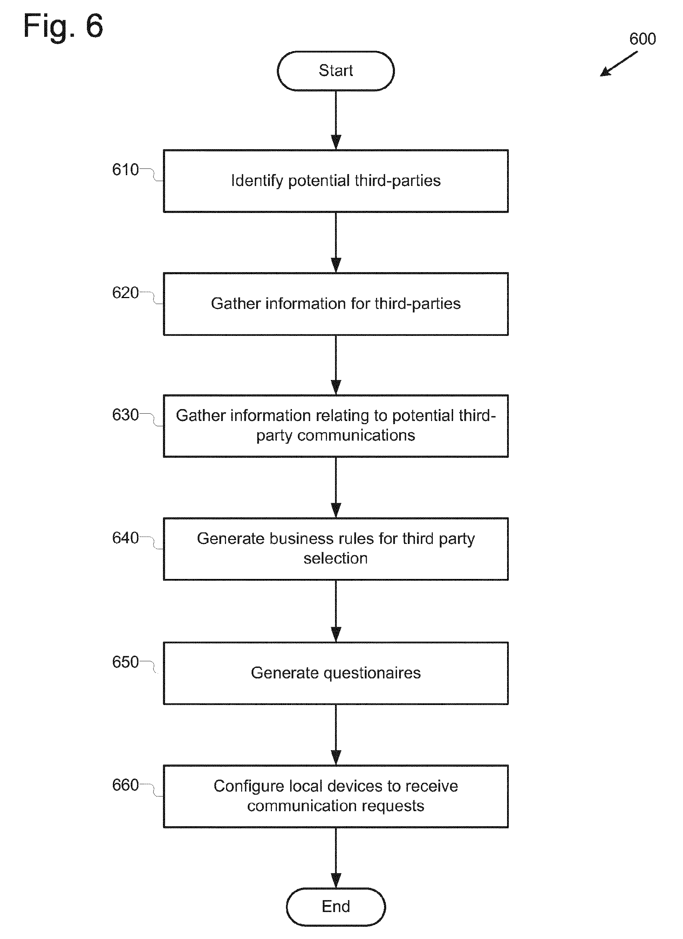

The process may begin at operation 510, where the dedicated message channel coordinator 100, or other system providing facilitated third party communication, may be configured for such facilitation. In various embodiments, at operation 510, the dedicated message channel coordinator 100, or other system implementing techniques described herein, may be configured with information about third parties and/or information that may be need to be gathered for later third party communication. Particular examples of operation 510 may be described below with reference to Figure 6. Next, at operation 520, the dedicated message channel coordinator 100 may receive a request for third-party communication, such as from a message recipient or from a content generator. For example, in the example provided above, the recipient physician requested information about off-label usage. In such a scenario, the physician may indicate, such as using the dedicated message application 190, that he or she wishes to speak with someone about such usage. In another scenario, a sales representative may themselves communicate directly with the dedicated message channel coordinator 100 to start a third-party communication, such as in response to a (on- or off-channel) request from the physician.

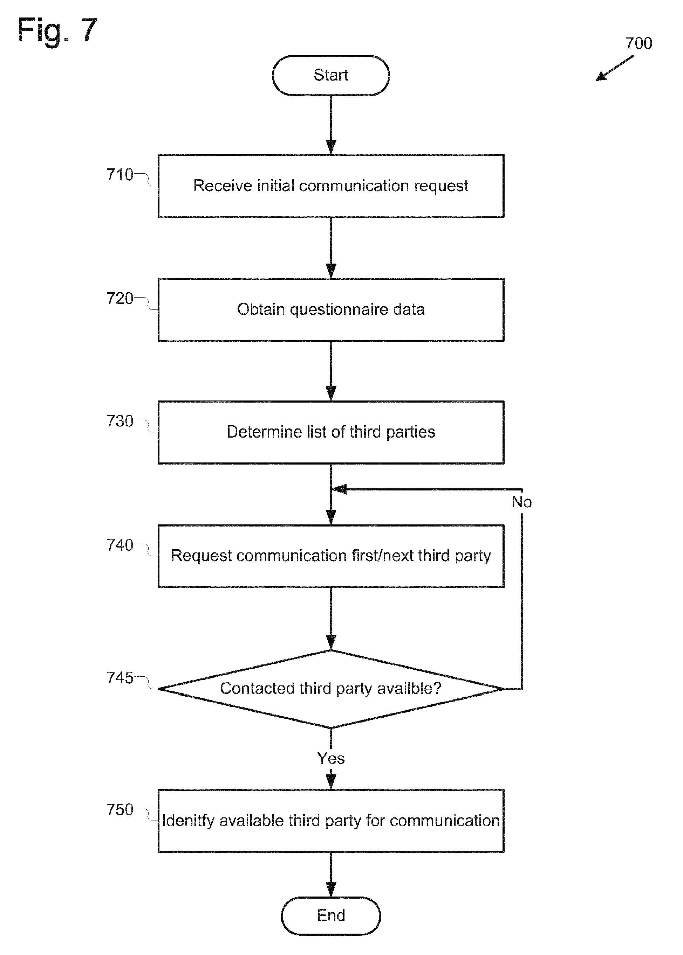

Next at operation 530, the dedicated message channel coordinator 100 may identify a third party to use for communication with the recipient. Particular examples of operation 530 may be described below with reference to Figure 7. Next at operation 540, the dedicated message channel coordinator 100 may facilitate third-party communication between the identified third party and the recipient. In various embodiments, such facilitated communication may include the ability to maintain information and/or communication context if the communication is stopped or interrupted. Particular examples of operation 540 may be described below with reference to Figure 7.

Figure 6 is a flowchart illustrating an example process 600 for setting up a system, such as the dedicated message channel coordinator, for facilitating third party communication. In various embodiments, process 600 may provide implementations of operation 510 of process 500. The process may begin at operation 610, where the system may identify potential third-parties for later communication. For example, in various embodiments, third parties may be provided an interface for registering with the system for future communication. In some embodiments, the system may identify third parties based on available information and seek out registration of the third parties. Next, at operation 620, the system may gather information for the third parties, such as to use during subsequent communication. In various embodiments, the information gathered at operation 620 may include, but is not limited to, identifying information about the third parties, such as name, address, telephone number, email address, etc.; demographic information; biographic information; work/educational experience; availability information, such as days and times of availability; areas of special knowledge, languages used, etc. In other embodiments, other information, such professional behavior and experience information, may be gathered, such as prescribing behavior/history, content consumption history, interactions with colleagues, and/or participation in educational events or seminars,.

Next, at operation 630, the system may, in various embodiments, gather information relating to potential third-party communications. In various embodiments, at operation 630 the system may gather information about potential topics of communication that may be entered into by recipients and third parties. For example, in the scenario of the physician communicating with a medical specialist, the system may gather information about potential drugs and/or medical conditions for which a physician may wish to have a communication with a third party. In some embodiments, this information may be related to potential recipients (e.g., physicians) or potential third parties, and their various experiences and/or work practices.

Next, at operation 640, the system may generate one or more business rules that may be applied when facilitating a third party communication to select a third party. In various embodiments, these business rules may be used by the third party selection module 175 to identify a third party for communication, as discussed below. Next, at operation 650, the system may generate questionnaires, such as by the questionnaire generation module 173, to use to gather information at the time of a third party communication request. These questionnaires may be generated using the information gathered previously during performance of process 600 and may be generated to elicit information that may be applied to the business rules generated at operation 640. Next, at operation 660, the system may configure local computing device associated with third parties to receive communication requests. In various embodiments, the computing devices may be configured with one or more communications tools, such as video conferencing, web conferencing, email, text message, text chat, audio, file sharing, interactive content, and/or other tools. In various embodiments, the computing devices may also be configured receive requests to commence communication, and to present an alert to a third party in response to receiving a request. After operation 660, the process may end.

Figure 7 is a flowchart illustrating an example process 700 for identifying a third party for communication. In various embodiments, process 700 may provide implementations of operation 530 of process 500. The process may begin at operation 710, where the system, such as the dedicated message channel coordinator 100 may receive an initial communication request. In various embodiments, the request may be made at the recipient device 180 through the dedicated messaging application 190; in other embodiments, other methods may be used to receive the request. In various embodiments, the request may be made directly by the recipient, or by an intermediary (e.g., by a pharmaceutical sales representative for a physician). Next, at operation 720, the system may obtain questionnaire data. In various embodiments, questionnaire data may be obtained by presenting a questionnaire to the recipient and/or intermediary from the questionnaire generation module 173.

Next, at operation 730, the system may determine a list of third parties that may be communicated with. In various embodiments, the list of third parties may be determined through application of one or more business rules, such as by the third party selection module 175. In various embodiments, at operation 175, the third party selection module 175 may apply business rules to various information, such as the questionnaire data obtained at operation 720, and information about third parties obtained during the execution of process 600. Next, at operation 740, the system may request communication from the third party that is first on the list. In various embodiments, this request may be performed by causing an alert to appear on the computing device associated with the third party being requested. At decision operation 745, the system may determine whether the contacted third party is available. In various embodiments, at decision operation 745, the system may wait after sending the request for a pre-determined period of time to allow for the contacted third party to respond. In other embodiments, at operation 745, if the third party is not available, the system may receive an automatic response that the third party is unavailable, such as from the communication request module 165 of the computing device associated with the third party. If the third party is unavailable, then the process may return to operation 740, where the system may request communication from the next third party in the list of third parties and may determine if the newly-contacted third party is available at operation 745. If, however, the third party is available, then at operation 750, the system may identify the available third party for communication. The process may then end.

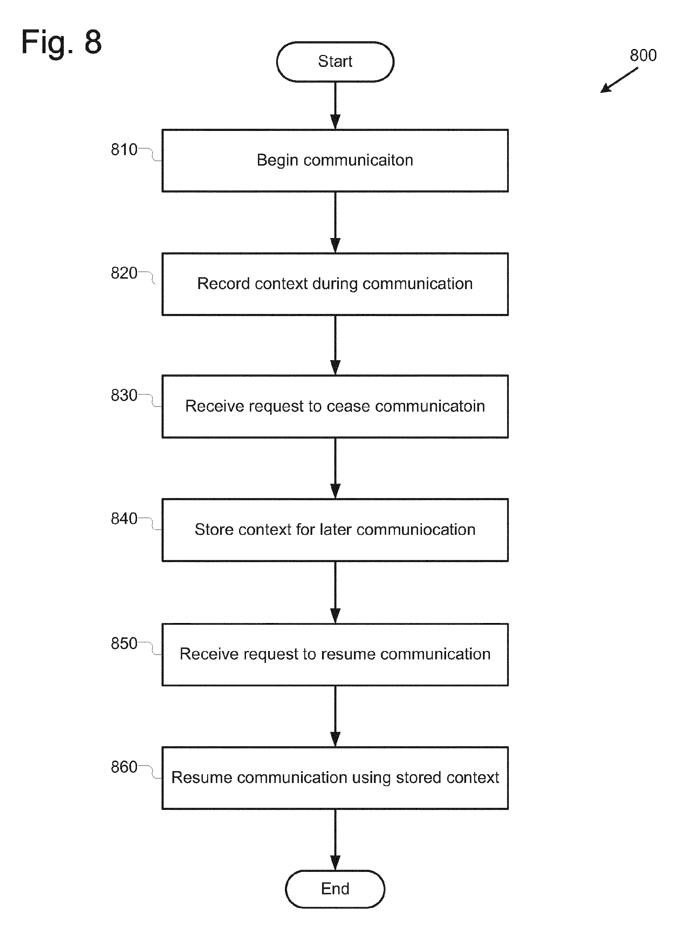

Figure 8 is a flowchart illustrating an example process 800 for facilitating third party communication. In various embodiments, process 800 may provide implementations of operation 540 of process 500. The process may begin at operation 810, where the communication between the recipient and the third party may begin. As discussed herein, in various embodiments, the communication may take place via various means/tools, such as video or audio conferencing, text communication, text chat, email, etc. At operation 820, the system may record the context of the communication as it is taking place; the context may then be maintained, such as by the communication history module 130.

Next, at operation 830, the system may receive a request to cease the communication. In various embodiments, the request may be to permanently cease the communication or to temporarily cease the communication. At operation 840, the system may store the context for later communication, such as by the communication history module 130. Next, at operation 850, the system may later receive a request to resume communication. In various embodiments, the request may be received to resume a communication that has been temporarily ceased; in other embodiments, the request may be a new request that is not explicitly associated with a previous communication. Then, at operation 860, the system may resume the communication between the third party and the recipient using the stored context. In various embodiments, at operation 860 message and/or data history may be restored to the resumed communication to facilitate the recipient and third party in communicating using their previously-established context. In other embodiments, at operation 860, a communication may utilize a restored context even if the same third party is not used; this may facilitate a recipient in receiving a more uniform experience if different third parties are used from communication to communication. The process may then end. It may be noted that, while in the example above third party communication was described as ceasing and being restarted, in other embodiments, communication sessions may be persistent, in that they are not ended even when communication temporarily pauses. In such scenarios, communication context may be maintained, but may not have to be stored and restored, as the persistent communication itself may still include the context.

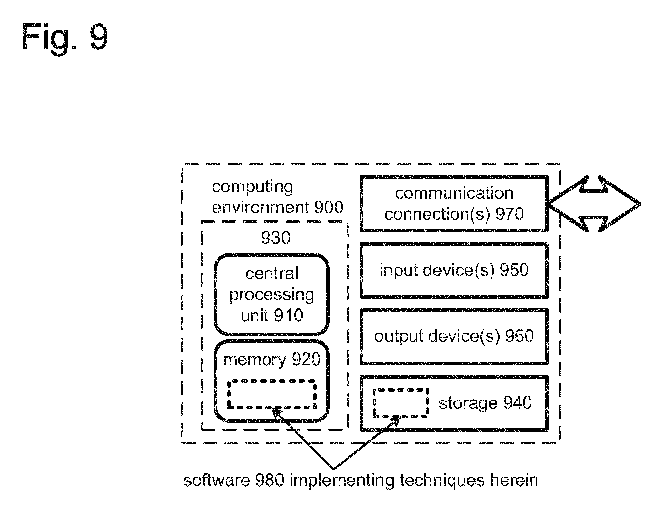

Figure 9 illustrates a generalized example of a suitable computing environment 900 in which several of the described embodiments may be implemented. The computing environment 900 is not intended to suggest any limitation as to scope of use or functionality, as the techniques and tools may be implemented in diverse general-purpose or special-purpose computing environments such as personal computers, consumer electronic devices, and the like.

With reference to Figure 9, the computing environment 900 includes at least one CPU 910 and associated memory 920. In Figure 9, this most basic configuration 930 is included within a dashed line. The processing unit 910 executes computer-executable instructions and may be a real or a virtual processor. In a multi-processing system, multiple processing units execute computer-executable instructions to increase processing power. The memory 920 may be volatile memory (e.g., registers, cache, RAM), non-volatile memory (e.g., ROM, EEPROM, flash memory, etc.), or some combination of the two. The memory 920 stores software 980 implementing the techniques described herein.

A computing environment may have additional features. For example, the computing environment 900 includes storage 940, one or more input devices 950, one or more output devices 960, and one or more communication connections 970. An interconnection mechanism (not shown) such as a bus, controller, or network interconnects the components of the computing environment 900. Typically, operating system software (not shown) provides an operating environment for other software executing in the computing environment 900, and coordinates activities of the components of the computing environment 900.

The storage 940 may be removable or non-removable, and includes magnetic disks, magnetic tapes or cassettes, CD-ROMs, DVDs, flash drives, disk arrays, or any other medium which can be used to store information and which can be accessed within the computing environment 900. The storage 940 may be located remotely from the computing environment 940, such as in a cloud or network-based storage implementation. The storage 940 stores instructions for the software.

The input device(s) 950 may be a touch input device such as a keyboard, mouse, pen, or trackball, a voice input device, a scanning device, or another device that provides input to the computing environment 900. For audio or video encoding, the input device(s) 950 may be a sound card, video card, TV tuner card, or similar device that accepts audio or video input in analog or digital form, or a CD- or DVD-based drive that reads audio or video samples into the computing environment 900. The output device(s) 960 may be a display (e.g., monitor, display screen, or the like), printer, speaker, DVD-writer, or another device that provides output from the computing environment 900.

The communication connection(s) 970 enable communication over a communication medium to another computing entity. The communication medium conveys information such as computer-executable instructions, audio or video input or output, or other data in a modulated data signal. A modulated data signal is a signal that has one or more of its characteristics set or changed in such a manner as to encode information in the signal. By way of example, and not limitation, communication media include wired or wireless techniques implemented with an electrical, optical, RF, infrared, acoustic, or other carrier.

The techniques and tools can be described in the general context of non-transitory computer-readable media. Computer-readable media are any available media that can be accessed within a computing environment. By way of example, and not limitation, with the computing environment 900, computer-readable media include memory 920, computer-readable storage media 940 (e.g., CDs, DVDs, diskettes, flash drives, removable hard drives, hard drive arrays), and combinations of any of the above.

The techniques and tools can be described in the general context of computer-executable instructions, such as those included in program modules, being executed in a computing environment on a target real or virtual processor. Generally, program modules include routines, programs, libraries, objects, classes, components, data structures, etc. that perform particular tasks or implement particular abstract data types. The functionality of the program modules may be combined or split between program modules as desired in various embodiments. Computer-executable instructions for program modules may be executed within a local or distributed computing environment.

Although certain embodiments have been illustrated and described herein, it will be appreciated by those of ordinary skill in the art that a wide variety of alternate and/or equivalent embodiments or implementations calculated to achieve the same purposes may be substituted for the embodiments shown and described without departing from the scope of the present invention. Those with skill in the art will readily appreciate that embodiments in accordance with the present invention may be implemented in a very wide variety of ways. This application is intended to cover any adaptations or variations of the embodiments discussed herein. Therefore, it is manifestly intended that embodiments in accordance with the present invention be limited only by the claims and the equivalents thereof.

The embodiments described herein provide for the ability to create a secure, dedicated message channel for a message recipient; facilitate generation of messages by a content generator for the message recipient; transmit generated messages to a recipient over the dedicated message channel; provide an application to facilitate the dedicated message channel; facilitate bi-directional communication over the dedicated message channel; facilitate communication between a third party and the message recipient; and track and record history of communications between a message recipient and one or more parties.

Other embodiments may also be disclosed and described. Furthermore, the present teaching may also extend to one or more of the following numbered clauses:
1. A computer-implemented method for facilitating communication between a first party and a second party communicating via a dedicated message channel, the method comprising:
   receiving, by a computing system, a request for the first party to communicate with a third party via the dedicated message channel;
   identifying, by the computing system, based at least in part on information provided via the dedicated message channel, an identified third party; and
   facilitating, by the computing system, communication between the first party and the identified third party via the dedicated message channel.
2. The method of clause 1, wherein communications are performed at least in part using a dedicated message application and wherein receiving the request comprises receiving the request via the dedicate message application.
3. The method of clause 1, wherein identifying an identified third party comprises identifying the identified third party based on application of one or more business rules to the information provided via the dedicated message channel.
4. The method of clause 3, wherein identifying an identified third party further comprises:
   requesting information relating to the request for the first party to communicate with the third party;
   receiving the requested information; and
   applying the one or more business rules to the requested information.
5. The method of clause 4, wherein requesting information relating to the request for the first party to communicate with the third party comprises providing a questionnaire for completion by the first party.
6. The method of clause 3, wherein identifying an identified third party further comprises:
   determining, based on application of the business rules, a list of third parties that may be communicated with; and
   selecting a third party from the list.
7. The method of clause 6, wherein selecting a third party from the list comprises:
   contacting one or more third parties from the list; and
   selecting a third party that is available to communicate with the first party.
8. The method of clause 1, wherein facilitating communication between the first party and the identified third party further comprises:
   receiving a request to cease the communication, the communication having a particular context at the point of cessation;
   receiving a subsequent request to resume communication; and
   resuming the communication, including the context.
9. The method of clause 8, wherein facilitating communication between the first party and the identified third party comprises recording the context during communication between the first party and the identified third party.
10. One or more computer-readable media comprising instructions written thereon that, in response to execution on a computing system, cause the computing system to facilitate communication between a first party and a second party communicating via a dedicated message channel by causing the computing system to:
   receive a request for the first party to communicate with a third party via the dedicated message channel;
   identify, based at least in part on information provided via the dedicated message channel, an identified third party; and
   facilitate communication between the first party and the identified third party via the dedicated message channel.
11. The computer-readable media of clause 10, wherein communications are performed at least in part using a dedicated message application and wherein receive the request comprises receive the request via the dedicate message application.
12. The computer-readable media of clause 10, wherein identify an identified third party comprises identify the identified third party based on application of one or more business rules to the information provided via the dedicated message channel.
13. The computer-readable media of clause 12, wherein identify an identified third party further comprises:
   request information relating to the request for the first party to communicate with the third party;
   receive the requested information; and
   apply the one or more business rules to the requested information.
14. The computer-readable media of clause 13, wherein request information relating to the request for the first party to communicate with the third party comprises provide a questionnaire for completion by the first party.
15. The computer-readable media of clause 12, wherein identify an identified third party further comprises:
   determine, based on application of the business rules, a list of third parties that may be communicated with; and
   select a third party from the list.
16. The computer-readable media of clause 15, wherein select a third party from the list comprises:
   contact one or more third parties from the list; and
   select a third party that is available to communicate with the first party.
17. The computer-readable media of clause 10, wherein facilitate communication between the first party and the identified third party further comprises:
   receive a request to cease the communication, the communication having a particular context at the point of cessation;
   receive a subsequent request to resume communication; and
   resume the communication, including the context.
18. The computer-readable media of clause 17, wherein facilitate communication between the first party and the identified third party comprises record the context during communication between the first party and the identified third party.
19. A system for facilitation of communication between a first party and a second party communicating via a dedicated message channel, the system comprising:
   one or more computing processors; and
   logic configured to operate on the one or more computing processors to:
      receive a request for the first party to communicate with a third party via the dedicated message channel;
      identify, based at least in part on information provided via the dedicated message channel, an identified third party; and
      facilitate communication between the first party and the identified third party via the dedicated message channel.
20. The system of clause 19, wherein communications are performed at least in part using a dedicated message application and wherein receive the request comprises receive the request via the dedicate message application.
21. The system of clause 19, wherein identify an identified third party comprises identify the identified third party based on application of one or more business rules to the information provided via the dedicated message channel.
22. The system of clause 21, wherein identify an identified third party further comprises:
   request information relating to the request for the first party to communicate with the third party;
   receive the requested information; and
   apply the one or more business rules to the requested information.
23. The system of clause 22, wherein request information relating to the request for the first party to communicate with the third party comprises provide a questionnaire for completion by the first party.
24. The system of clause 21, wherein identify an identified third party further comprises:
   determine, based on application of the business rules, a list of third parties that may be communicated with; and
   select a third party from the list.
25. The system of clause 24, wherein select a third party from the list comprises:
   contact one or more third parties from the list; and
   select a third party that is available to communicate with the first party.
26. The system of clause 19, wherein facilitate communication between the first party and the identified third party further comprises:
   receive a request to cease the communication, the communication having a particular context at the point of cessation;
   receive a subsequent request to resume communication; and
   resume the communication, including the context.
27. The system of clause 26, wherein facilitate communication between the first party and the identified third party comprises record the context during communication between the first party and the identified third party.

## Claims

1. A computer-implemented method for facilitating communication between a first party and a second party communicating via a dedicated message channel, the method comprising:
receiving, by a computing system, a request for the first party to communicate with a third party via the dedicated message channel;
identifying, by the computing system, based at least in part on information provided via the dedicated message channel, an identified third party; and
facilitating, by the computing system, communication between the first party and the identified third party via the dedicated message channel.

2. The method of claim 1, wherein communications are performed at least in part using a dedicated message application and wherein receiving the request comprises receiving the request via the dedicate message application.

3. The method of claim 1, wherein identifying an identified third party comprises identifying the identified third party based on application of one or more business rules to the information provided via the dedicated message channel.

4. The method of claim 3, wherein identifying an identified third party further comprises:
requesting information relating to the request for the first party to communicate with the third party;
receiving the requested information; and
applying the one or more business rules to the requested information.

5. The method of claim 4, wherein requesting information relating to the request for the first party to communicate with the third party comprises providing a questionnaire for completion by the first party.

6. The method of claim 3, wherein identifying an identified third party further comprises:
determining, based on application of the business rules, a list of third parties that may be communicated with; and
selecting a third party from the list.

7. The method of claim 6, wherein selecting a third party from the list comprises:
contacting one or more third parties from the list; and
selecting a third party that is available to communicate with the first party.

8. The method of claim 1, wherein facilitating communication between the first party and the identified third party further comprises:
receiving a request to cease the communication, the communication having a particular context at the point of cessation;
receiving a subsequent request to resume communication; and
resuming the communication, including the context.

9. The method of claim 8, wherein facilitating communication between the first party and the identified third party comprises recording the context during communication between the first party and the identified third party.

10. A system for facilitation of communication between a first party and a second party communicating via a dedicated message channel, the system comprising:
one or more computing processors; and
logic configured to operate on the one or more computing processors to:
receive a request for the first party to communicate with a third party via the dedicated message channel;
identify, based at least in part on information provided via the dedicated message channel, an identified third party; and
facilitate communication between the first party and the identified third party via the dedicated message channel.

11. The system of claim 10, wherein identify an identified third party comprises identify the identified third party based on application of one or more business rules to the information provided via the dedicated message channel.

12. The system of claim 11, wherein identify an identified third party further comprises:
request information relating to the request for the first party to communicate with the third party;
receive the requested information; and
apply the one or more business rules to the requested information.

13. The system of claim 11, wherein identify an identified third party further comprises:
determine, based on application of the business rules, a list of third parties that may be communicated with; and
select a third party from the list.

14. The system of claim 10, wherein facilitate communication between the first party and the identified third party further comprises:
receive a request to cease the communication, the communication having a particular context at the point of cessation;
receive a subsequent request to resume communication; and
resume the communication, including the context.

15. One or more computer-readable media comprising instructions written thereon that, in response to execution on a computing system, cause the computing system to facilitate communication between a first party and a second party communicating via a dedicated message channel by causing the computing system to:
receive a request for the first party to communicate with a third party via the dedicated message channel;
identify, based at least in part on information provided via the dedicated message channel, an identified third party; and
facilitate communication between the first party and the identified third party via the dedicated message channel.
